# FASCICULE DE BREVET EUROPEEN

(11) **EP 2 229 629 B1**
(45) Date de publication et mention de la délivrance du brevet: **29.06.2011**
(21) Numéro de dépôt: 08864195.6
(22) Date de dépôt: 04.12.2008
(51) Int. Cl.: G06F 11/14

(54) **PROCEDE ET DISPOSITIF DE SAUVEGARDE AUTOMATIQUE DE DONNEES NUMERIQUES CONSERVEES EN MEMOIRE DANS UNE INSTALLATION INFORMATIQUE, AINSI QUE SUPPORT DE DONNEES LISIBLE PAR UN ORDINATEUR MEMORISANT LES INSTRUCTIONS DUDIT PROCEDE**
VERFAHREN UND VORRICHTUNG FÜR DIE AUTOMATISCHE SICHERUNG DIGITALER DATEN EINES SPEICHERS EINER COMPUTERINSTALLATION UND VON EINEM COMPUTER MIT DEN ENTSPRECHENDEN BEFEHLEN IM SPEICHER LESBARER DATENTRÄGER
METHOD AND DEVICE FOR AUTOMATICALLY BACKING UP DIGITAL DATA PRESERVED IN MEMORY IN A COMPUTER INSTALLATION AND DATA MEDIUM READABLE BY A COMPUTER HAVING THE ASSOCIATED INSTRUCTIONS STORED IN THE MEMORY THEREOF

(30) Priorité: 06.12.2007 FR 0708519
(43) Date de publication de la demande: 22.09.2010
(73) Titulaire: F-SECURE SDC, 33520 Bruges (FR)
(72) Inventeur: Camborde, Christophe, 75013 Paris (FR)
(74) Mandataire: Bonnet, Michel
(86) Numéro de dépôt international: PCT/FR2008/052210
(87) Numéro de publication internationale: WO 2009/080944

(56) Documents cités:
- EP-A- 1 511 269
- US-A1- 2002 087 588
- US-A1- 2005 060 356
- US-A1- 2005 240 732
- US-A1- 2005 257 085

## Description

La présente invention concerne un procédé de sauvegarde automatique de données numériques, conservées en mémoire dans une installation informatique, vers un système de sauvegarde distant accessible par l'installation informatique via un réseau de transmission de données. Elle concerne également un support de données lisible par un ordinateur, une installation informatique et un système pour la mise en oeuvre de ce procédé.

De tels procédés de sauvegarde sont connus et permettent de protéger l'accès à des données numériques conservées en mémoire dans une installation informatique. En effet, cet accès peut être contrarié par :
- une perte pure et simple des données numériques de l'installation informatique lors de catastrophes telles qu'une inondation, un incendie, ou plus simplement lors d'accidents tels qu'un endommagement inattendu d'un disque dur ou même encore plus couramment lors d'une mauvaise manipulation causée par un utilisateur, ou
- une panne partielle ou générale, même momentanée, de l'installation informatique ne permettant plus d'accéder aux données qu'elle stocke.

De plus en plus de données importantes voire vitales étant conservées sous forme électronique, il est essentiel de concevoir des procédés de sauvegarde offrant une garantie élevée de retrouver ces données sous la version la plus récente possible en cas de problème sur l'installation informatique. Il est également important que ces procédés soient automatiques pour qu'un utilisateur n'ait pas à s'en soucier dans son utilisation courante de l'installation informatique. Ces procédés sont donc généralement mis en oeuvre sous la forme d'applications de sauvegarde, préalablement paramétrées, s'exécutant sur l'installation informatique.

Le brevet américain publié sous le numéro US 6,757,698 propose ainsi un procédé mis en oeuvre par une application de sauvegarde paramétrable par un utilisateur. L'utilisateur détermine lui-même quelles sont les données numériques qu'il souhaite sauvegarder régulièrement et définit la fréquence des sauvegardes. Pour garantir la sécurité des données sauvegardées, il est prévu de définir plusieurs destinations de sauvegarde, dont l'une est un système de stockage distant, accessible par l'installation informatique hôte via Internet. Lors de chaque sauvegarde programmée, l'application détermine quelles sont les données qui ont été modifiées depuis la sauvegarde précédente et ne sélectionne que les données qui ont été modifiées ou ajoutées pour la nouvelle sauvegarde.

Cependant, bien qu'automatique ce procédé exige une certaine expertise de l'utilisateur pour définir l'ensemble des paramètres d'exécution de l'application de sauvegarde. Pour un fonctionnement optimal des sauvegardes, ceux-ci peuvent en effet varier d'une installation informatique à une autre. En outre cela suppose que l'utilisateur sait déterminer l'ensemble des données importantes qui méritent d'être sauvegardées. Si cela est effectivement réaliste lorsque l'utilisateur est un professionnel agissant dans un service de support informatique d'une entreprise, il n'en est généralement pas de même lorsque l'utilisateur est un particulier, ou même gérant d'une petite structure professionnelle n'ayant pas les moyens de se doter d'un service de support informatique.

Le document US-A-2005/257085 constitue l'état de la technique le plus proche, car il divulgue un procédé de sauvegarde automatique à distance permettent l'analyse des données, le classement des données, leur rangement selon des critères de priorité ainsi que l'exécution de la sauvegarde, le cas échéant.

Il peut ainsi être souhaité de prévoir un procédé de sauvegarde automatique qui soit simple d'utilisation et ne nécessite pas de connaissance particulière de la part d'un utilisateur, en matière de sauvegardes ou plus généralement de systèmes informatiques.

L'invention a donc pour objet un procédé de sauvegarde automatique de données numériques conservées en mémoire dans une installation informatique vers un système de sauvegarde comportant l'étape consistant à analyser les données numériques conservées en mémoire et classer les données numériques analysées en une pluralité de classes de priorités différentes, le procédé étant caractérisé en ce que le système de sauvegarde est distant et accessible par l'installation informatique via un réseau de transmission de données, et en ce qu'il comporte en outre les étapes consistant à :
- extraire et analyser des informations de fonctionnement de l'installation informatique, ces informations de fonctionnement comportant au moins l'un des éléments de l'ensemble constitué d'une puissance et d'une mémoire disponibles, de la nature et de la version du système d'exploitation de l'installation informatique, de la nature des applications installées et exécutables par l'installation informatique, de la nature et de la capacité d'une connexion de l'installation informatique au réseau de transmission, d'une date de fabrication ou mise en service de l'installation informatique, d'une fréquence de mise en route, en veille ou en arrêt de l'installation informatique, et d'une organisation générale des répertoires et d'un classement de fichiers dans ces répertoires,
- déterminer des paramètres d'une application de sauvegarde de données vers le système de sauvegarde, en fonction du résultat de cette analyse, et
- exécuter l'application de sauvegarde sur au moins une partie des données numériques, en fonction des paramètres et des classes de priorités déterminés.

Tirer profit d'étapes préalables d'analyses combinées des données numériques et du fonctionnement général de l'installation informatique qui les héberge permet en effet de s'affranchir de l'expertise de l'utilisateur final pour paramétrer l'application de sauvegarde et sélectionner les données à sauvegarder.

De façon optionnelle, les paramètres de l'application de sauvegarde comportent au moins l'un des éléments de l'ensemble constitué d'une limite de puissance consommée autorisée pour l'application de sauvegarde, d'une option d'exécution de l'application de sauvegarde en mode dégradé et de critères de sélection des données numériques à sauvegarder.

De façon optionnelle, les critères de sélection et/ou la classification des données numériques en classes de priorités différentes portent au moins sur la nature des données numériques.

De façon optionnelle, les critères de sélection et/ou la classification des données numériques en classes de priorités différentes portent en outre sur au moins l'un des éléments de l'ensemble constitué de leur taille, de leurs dates de création, de dernière modification et/ou de dernier accès, de données supplémentaires d'informations qui leur sont associées, d'un répertoire dans lequel elles sont situées, d'une relation entre ces données et une base de registre d'un système d'exploitation de l'installation informatique et d'une appartenance à une liste de données soit a priori exclues, soit a priori inclues.

De façon optionnelle, le procédé de sauvegarde automatique comporte une étape consistant à définir au moins une partie des paramètres de l'application de sauvegarde depuis un serveur d'administration connecté au réseau de transmission de données et à transmettre cette partie de paramètres à l'installation informatique pour l'exécution de l'application de sauvegardé sur la base d'au moins cette partie de paramètres.

De façon optionnelle, le procédé de sauvegarde automatique comporte en outre une étape consistant à détecter la création en mémoire ou la modification d'une donnée numérique et, en réponse à cette détection, à analyser cette donnée numérique pour lui affecter un coefficient de priorité et à exécuter l'application de sauvegarde sur cette donnée numérique, en fonction des paramètres et du coefficient de priorité qui lui est affecté.

L'invention a également pour objet un support de données lisible par un ordinateur comportant des instructions pour la mise en oeuvre d'un procédé selon l'invention.

L'invention a également pour objet une installation informatique pour la sauvegarde automatique de données numériques comportant des moyens de stockage de données numériques, des moyens d'analyse des données numériques stockées par l'installation informatique et des moyens de classification des données numériques analysées en une pluralité de classes de priorités différentes, caractérisée en ce qu'elle comporte en outre :
- une application de sauvegarde d'au moins une partie des données numériques vers un système de sauvegarde distant accessible par l'installation informatique via un réseau de transmission de données,
- des moyens d'extraction d'informations de fonctionnement de l'installation informatique, ces informations de fonctionnement comportant au moins l'un des éléments de l'ensemble constitué d'une puissance et d'une mémoire disponibles, de la nature et de la version du système d'exploitation de l'installation informatique, de la nature des applications installées et exécutables par l'installation informatique, de la nature et de la capacité d'une connexion de l'installation informatique au réseau de transmission, d'une date de fabrication ou mise en service de l'installation informatique, d'une fréquence de mise en route, en veille ou en arrêt de l'installation informatique, et d'une organisation générale de répertoires et d'un classement de fichiers dans ces répertoires,
- des moyens d'analyse de ces informations, et
- des moyens de détermination de paramètres de l'application de sauvegarde en fonction du résultat de cette analyse,
et en ce que l'application de sauvegarde est configurée pour s'exécuter sur au moins une partie des données numériques, en fonction des paramètres et des classes de priorités déterminés.

Enfin, l'invention a également pour objet un système informatique pour la sauvegarde automatique de données numériques conservées en mémoire dans une installation informatique, comportant une installation informatique selon l'invention et un système de sauvegarde distant accessible par l'installation informatique via un réseau de transmission de données.

L'invention sera mieux comprise à l'aide de la description qui va suivre, donnée uniquement à titre d'exemple et faite en se référant aux dessins annexés dans lesquels :
- la figure 1 représente la structure générale d'un système informatique pour la sauvegarde automatique de données numériques, conforme à un mode de réalisation de l'invention,
- la figure 2 représente schématiquement une interface d'une application de sauvegarde implémentée dans le système de la figure 1,
- la figure 3 illustre partiellement le fonctionnement de l'application de sauvegarde de la figure 2, pour l'accès aux données numériques, et
- la figure 4 illustre les étapes successives d'un procédé de sauvegarde automatique de données numériques, selon un mode de réalisation de l'invention.

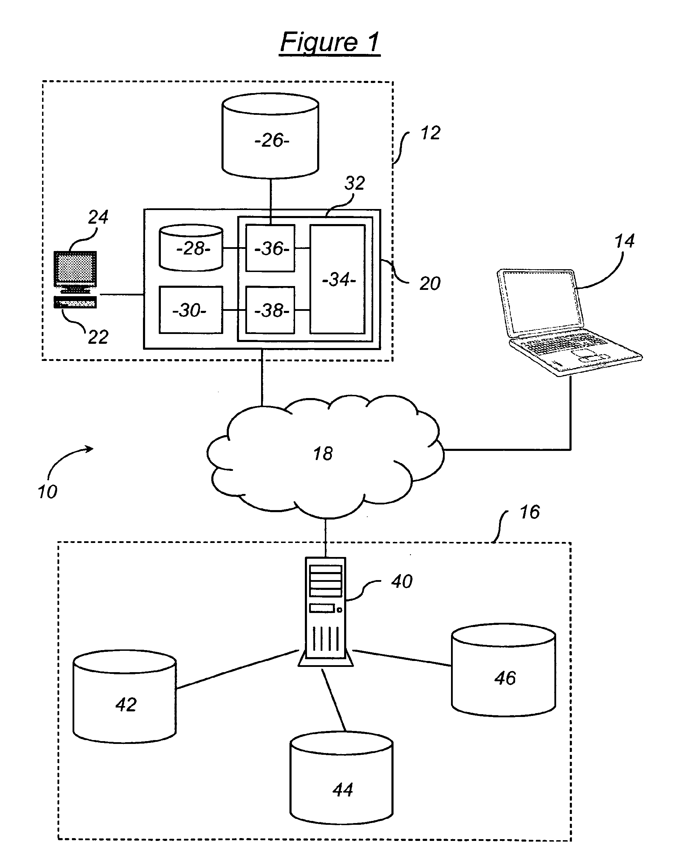

Le système informatique 10 représenté sur la figure 1 est configuré pour la sauvegarde automatique de données numériques conservées en mémoire dans une installation informatique 12 ou 14, vers un système de sauvegarde distant 16.

Ce système de sauvegarde distant 16 est accessible par l'installation informatique 12 ou 14 via un réseau 18 de transmission de données tel que le réseau Internet.

L'installation informatique 12 ou 14 peut être de type quelconque, du simple ordinateur portable 14 à une installation plus complexe telle que l'installation 12. L'installation 12, présentée plus précisément à titre d'exemple, comporte un micro-ordinateur constitué d'une unité centrale 20 connectée à plusieurs périphériques, parmi lesquels au moins un clavier 22, un écran 24 et un disque dur externe 26.

L'unité centrale 20 de l'installation informatique 12 comporte de façon classique (non représentée) un microprocesseur et des espaces de stockage de type disque dur interne, mémoire RAM, ROM, et/ou EEPROM, interconnectés grâce à un bus de communication. Ces éléments permettent de constituer des moyens 28 de stockage interne de données numériques, un module programmé 30 d'extraction d'informations de fonctionnement de l'installation informatique 12 et une application logicielle 32 d'analyse et de sauvegarde.

L'application logicielle 32 comporte une application 34 de sauvegarde, vers le système de sauvegarde 16, d'au moins une partie des données numériques stockées dans les moyens de stockage interne 28 et dans le disque dur externe 26. Elle comporte en outre un module programmé 36 d'analyse de ces données numériques et de classification des données numériques analysées en une pluralité de classes de priorités différentes. Enfin, elle comporte un module programmé 38 d'analyse des informations de fonctionnement de l'installation informatique 12 extraites par le module 30 et des moyens de détermination de paramètres de l'application de sauvegarde 34 en fonction du résultat de cette analyse.

Le système de sauvegarde distant 16 comporte au moins un serveur d'accès 40 connecté au réseau 18. Un seul serveur d'accès 40 est représenté sur la figure 1 par souci de simplicité, mais en réalité une pluralité de serveurs s'avère nécessaire. Ce serveur d'accès 40 est par ailleurs connecté localement à une pluralité d'espaces de stockage sécurisés 42, 44, 46, destinés à recevoir les données sauvegardées de plusieurs installations connectées au réseau 18, telles que l'installation informatique 12 ou 14.

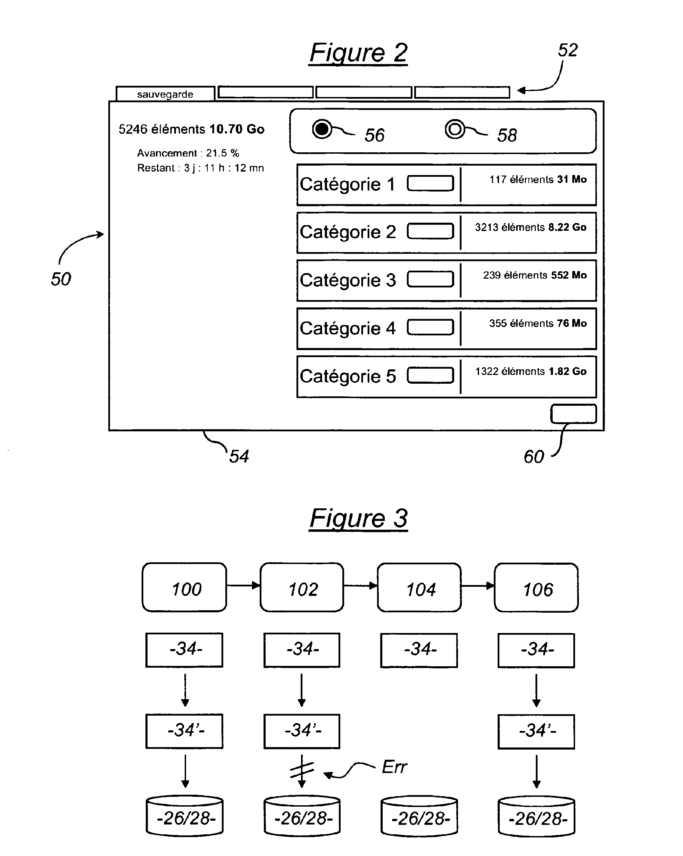

Le fonctionnement de l'application de sauvegarde 34 va maintenant être détaillé, en référence aux figures 2 et 3.

Comme cela est représenté sur la figure 2, une exécution de l'application de sauvegarde 34 peut être suivie, voire gérée, par un utilisateur à l'aide d'une interface interactive 50, visible sur l'écran 24. Cette interface 50 comporte plusieurs fenêtres de présentation d'informations, visualisables sélectivement par activation d'onglets 52. Dans l'exemple de la figure 2, purement illustratif, elle en comporte quatre, visualisables à l'aide d'onglets tels qu'un onglet de sauvegarde des données, un onglet de restauration des données, un onglet de configuration de l'application et un onglet d'assistance. Dans l'exemple de la figure 2, l'onglet de sauvegarde des données est activé et c'est une fenêtre 54 de présentation de la sauvegarde des données qui est affichée à l'écran 24.

Cette fenêtre 54 indique, par exemple, en haut à gauche des informations permettant un suivi de la sauvegarde en cours : le nombre (par exemple 5246) d'éléments sélectionnés par l'application de sauvegarde 34 et la taille totale correspondante des données numériques à sauvegarder (10,70 Giga Octets), la progression de la sauvegarde (« Avancement : 21,5 % ») et une estimation du temps nécessaire restant (« Restant : 3 j : 11 h : 12 mn »). En variante, dans un mode de réalisation plus simple à mettre en oeuvre, seule une indication en temps réel du nombre et de la taille des documents sauvegardés par le système de sauvegarde 16 est affichée.

De façon optionnelle, dans une zone représentée ici en haut à droite de la fenêtre 54, deux boutons actifs 56 et 58 permettent de sélectionner, soit un mode de fonctionnement par défaut de l'application de sauvegarde dans lequel la sélection des données numériques pour la sauvegarde est réalisée automatiquement en fonction des paramètres et des classes de priorités déterminés par les modules programmés 36 et 38 (bouton actif 56 sélectionné), soit un mode de fonctionnement avancé de l'application de sauvegarde dans lequel la sélection peut être modifiée voire complètement redéfinie manuellement par l'utilisateur (bouton actif 58 sélectionné).

De façon optionnelle, dans une zone représentée ici dans la partie droite de la fenêtre 54, les éléments sélectionnés sont représentés par catégories et les informations permettant le suivi de la sauvegarde sont au moins partiellement reprises dans chaque catégorie. L'appartenance d'un élément, c'est-à-dire d'une donnée numérique identifiée par un fichier, à une catégorie donnée est par exemple déterminée automatiquement par le module programmé d'analyse 36 à l'aide du type de la donnée numérique identifié par l'extension du fichier correspondant. Elle peut aussi être déterminée automatiquement à l'aide de données supplémentaires associées au fichier correspondant, appelées communément méta-données, ou à l'aide de la localisation du fichier dans une arborescence de répertoires de l'installation informatique 12. Ainsi, une première catégorie, nommée « catégorie 1 » concerne les documents de bureautique issus de traitements de textes, tableurs ou autres reconnaissables par des extensions telles que *.doc, *.xls, *.ppt, etc. Une deuxième catégorie, nommée « catégorie 2 » concerne les documents de type photo ou vidéo reconnaissables par des extensions telles que *.jpg, *.tiff, *.bmp, *.mpg, *.avi, etc. Une troisième catégorie, nommée « catégorie 3 » concerne les documents de type audio reconnaissables par des extensions telles que *.wav, *.au, etc. Une quatrième catégorie, nommée « catégorie 5 » concerne les documents de messagerie, contacts et favoris tels que le contenu de boîtes de réception/émission de courriers électroniques. Enfin, une cinquième catégorie, nommée « catégorie 4 » concerne les autres documents, ceux qui ne correspondent à aucune des quatre catégories précédentes.

Ces cinq catégories, de la catégorie 1 à la catégorie 5, sont par exemple ordonnées de la plus importante à la moins importante, cette propriété devant être prise en compte par l'application de sauvegarde 34 lors de son exécution. Par ailleurs, les données numériques au sein d'une même catégorie peuvent être hiérarchisées par ordre d'importance en plusieurs classes de priorités différentes, selon leur type ou d'autres critères, de manière à affiner la classification des données et par suite la stratégie de sauvegarde.

Enfin, de façon optionnelle, un bouton actif 60 situé, dans l'exemple de la figure 2, en bas à droite de la fenêtre 54 permet à l'utilisateur de suspendre temporairement l'exécution de l'application de sauvegarde 34.

La figure 3 illustre un mode de réalisation dans lequel le fonctionnement de l'application de sauvegarde 34 est conçu pour se prémunir d'erreurs dites « fatales ». Une erreur fatale se produit par exemple lorsque l'accès à une donnée par une application entre en conflit avec l'action d'une autre application sur cette donnée ou est perturbé par un dysfonctionnement de l'installation informatique. Dans ce cas, l'application qui tente d'accéder à la donnée est interrompue brutalement. Pour éviter de soumettre l'application de sauvegarde 34 à ce genre de risque dans ce mode de réalisation, celle-ci n'accède pas directement aux données à sauvegarder. Elle exécute une autre application 34', dite application de lecture, qui accède aux données à sa place et les lui transmet.

Ainsi, lors d'une première étape 100, l'application de sauvegarde 34, qui s'exécute sur l'installation informatique 12, lance l'application de lecture 34' pour accéder à des données numériques à sauvegarder, stockées indifféremment sur le disque dur externe 26 ou dans les moyens de stockage interne 28.

Lors d'une étape 102 suivante, une erreur fatale Err se produit lors de l'accès à une donnée numérique par l'application de lecture 34'. L'exécution de l'application de lecture 34' est alors brutalement interrompue lors d'une étape 104.

Cette interruption d'exécution est détectée par l'application de sauvegarde 34 qui, lors d'une étape 106, relance l'application de lecture 34' pour accéder à des données numériques à sauvegarder, comme à l'étape 100. Par conséquent, l'erreur fatale Err n'a pas perturbé l'exécution de l'application de sauvegarde 34 qui est de ce fait protégée.

En outre, lorsque l'application de sauvegarde 34 détecte l'interruption d'exécution due à l'erreur fatale Err, elle peut exclure temporairement la donnée ou la zone de données qui a causé cette interruption, pour reprendre la sauvegarde à l'étape 106 sur d'autres données à sauvegarder. En fin d'exécution, lorsqu'elle a sauvegardé toutes les autres données, l'application de sauvegarde 34 peut alors revenir sur les données ayant causé l'erreur fatale.

De façon optionnelle, l'application de sauvegarde 34 génère, lors de son exécution, un fichier de suivi des opérations de sauvegarde qui est stocké par exemple sur le disque dur interne de l'installation informatique 12. Ainsi, en cas d'interruption inattendue de l'application pour quelque problème que ce soit, celle-ci peut reprendre à l'endroit où elle s'est interrompue grâce à ce fichier de suivi.

De façon optionnelle également, l'exécution de l'application d'analyse et de sauvegarde 32, susceptible de consommer une partie importante du temps de calcul de l'installation informatique 12, est soumise à un régulateur de temps de calcul consommé comportant les deux fonctions suivantes :
- une fonction d'observation de la puissance de calcul consommée à chaque instant par l'application 32, et
- une fonction de régulation de la quantité d'opérations réalisées par l'application 32.

Le fonctionnement des modules programmés 30, 36 et 38 va maintenant être détaillé.

Sachant que les données numériques de l'installation informatique sont stockées sous forme de fichiers, le rôle du module 36 d'analyse et de classification des données numériques susceptibles d'être sauvegardées se décompose de la façon suivante :
- il doit tout d'abord répertorier un ensemble de fichiers de l'installation informatique susceptibles d'être sauvegardés et extraire automatiquement des informations sur ces fichiers,
- il doit ensuite analyser ces informations extraites pour associer chaque fichier à une classe de priorité donnée, pour éventuellement exclure a priori certains fichiers de la sauvegarde, ou pour au contraire en considérer certains comme vitaux.

Les informations pertinentes sur un fichier de donnée numérique et extraites par le module programmé 36 comportent au moins l'un des éléments de la liste suivante :
- des informations sur la nature du fichier, qui sont données par l'extension du fichier et/ou par ses attributs (par attributs d'un fichier, on entend fichier en lecture seule ou non, fichier caché ou non, fichier prêt à être archivé ou non),
- la taille du fichier,
- les dates de création, de dernière modification et/ou de dernier accès au fichier, caractérisant l'utilisation du fichier et donc son importance,
- les méta-données associées au fichier, qui peuvent avoir été saisies manuellement par l'utilisateur ou automatiquement par l'application qui a généré ce fichier (par exemple des données de gestion numérique des droits associés au fichier),
- la nature du répertoire dans lequel se trouve le fichier, une liste prédéterminée de répertoires pouvant avoir été définie pour identifier l'importance particulière de certains répertoires,
- la relation entre le fichier considéré et les autres fichiers du répertoire dans lequel il se trouve, ce qui permet de décider qu'un fichier a priori sans importance mais stocké dans le même répertoire que des fichiers importants devient alors un fichier important,
- la relation entre le fichier et la base de registre du système d'exploitation de l'installation informatique 12, en d'autres termes l'existence d'une association entre le fichier et une application logicielle de l'installation pour le lire et/ou l'exécuter,
- l'appartenance du fichier à une liste de fichiers a priori exclus, tels que les fichiers temporaires ou les fichiers système.

L'analyse des informations extraites pour associer chaque fichier à une classe de priorité donnée peut être réalisée à l'aide d'un ensemble de règles prédéterminées permettant d'estimer un coefficient pour chaque fichier, qui déterminera son appartenance à une classe, ou d'exclure a priori un fichier. Cet ensemble comporte par exemple au moins l'une, ou une combinaison, des règles suivantes :
- les extensions de fichiers sont a priori classées selon un ordre de priorité ; par exemple, comme vu précédemment, les extensions de type bureautique (*.doc, *.xls, *.ppt, etc.) sont prioritaires et se voient attribuer un coefficient de priorité élevé, puis viennent les extensions de type photo ou vidéo (*.jpg, *.tiff, *.bmp, *.mpg, *.avi, etc.), puis les extensions de type audio (*.wav, *.au), etc.,
- en ce qui concerne les attributs, les fichiers cachés, archivés ou en lecture seule sont a priori exclus de la sauvegarde, ou au moins leur coefficient de priorité est fortement réduit,
- si la taille du fichier n'est pas située entre un minimum et un maximum prédéterminés, le fichier est a priori exclu de la sauvegarde, ou au moins son coefficient de priorité est fortement réduit,
- si le fichier a été récemment créé, modifié, ou est souvent lu, son coefficient de priorité est augmenté,
- une liste prédéterminée de répertoires est a priori définie comme importante et/ou certains répertoires sont associés à des coefficients de priorité prédéterminée,
- si le fichier n'est pas considéré en tant que tel comme important en première analyse, mais qu'il est situé dans un répertoire dans lequel se trouvent des fichiers importants, son coefficient de priorité est augmenté,
- si le fichier n'est associé à aucune application, selon la base de registre du système d'exploitation de l'installation informatique 12, son coefficient de priorité est réduit,
- les fichiers tels que les fichiers temporaires des navigateurs sur Internet ou les fichiers du système d'exploitation sont exclus.

L'extraction des informations relatives aux fichiers susceptibles d'être sauvegardés et leur analyse permettent la classification des fichiers en plusieurs classes de priorités différentes. Cette hiérarchie de classes combinée éventuellement à la hiérarchie des catégories 1 à 5 précitées est utilisée ensuite par l'application de sauvegarde 34 pour définir ses priorités de sauvegarde, ou même effectuer une sélection, selon les circonstances.

Les circonstances dans lesquelles l'application de sauvegarde s'exécute et, par suite, le choix d'une stratégie de sauvegarde et donc de paramétrage de l'application de sauvegarde 34, sont déterminés par les modules programmés 30 et 38.

Le module 30 d'extraction d'informations de fonctionnement de l'installation informatique 12 extrait par exemple au moins l'une des informations suivantes :
- l'âge de l'installation informatique 12 (date de fabrication ou de mise en service),
- la nature et la version du système d'exploitation,
- la nature des applications utilisées par l'installation informatique et leur version (logiciels de messagerie, logiciels antivirus et pare-feu, etc.),
- la puissance et la mémoire disponibles,
- la nature et la capacité de la connexion de l'installation informatique au réseau 18,
- la fréquence de mise en route, en veille ou en arrêt de l'installation informatique 12,
- l'organisation générale des répertoires et le classement des fichiers dans ces répertoires.

Sur la base des informations extraites par le module programmé 30, le module d'analyse 38 effectue une analyse, par exemple en fonction de règles prédéfinies, telles que :
- si l'installation informatique 12 est obsolète et ses capacités réduites, ou si la puissance et la mémoire disponibles sont faibles, ou si la bande passante de la connexion au réseau 18 est réduite, choisir une stratégie de sauvegarde dégradée, dans laquelle seules les classes les plus importantes sont sélectionnées selon un seuil à déterminer, et éventuellement en avertir l'utilisateur de l'installation informatique 12 par courrier électronique,
- s'il s'agit d'une première sauvegarde des données numériques de l'installation informatique 12, choisir également la stratégie de sauvegarde dégradée, en compressant éventuellement une partie des données sauvegardées, puis relancer l'application de sauvegarde 34 une seconde fois en remplaçant les données sauvegardées sous forme compressée par ces mêmes données dans leur format et taille d'origine,
- adapter l'exécution de l'application 34 à la fréquence de mise en route, en veille ou en arrêt de l'installation informatique 12,
- exécuter l'application de sauvegarde 34 en tâche de fond sans perturber le fonctionnement de l'installation informatique, et détecter régulièrement, voire en temps réel, les modifications ou créations de fichiers pour les sauvegarder en priorité.

Sur la base de cette analyse, l'application de sauvegarde 34 est automatiquement paramétrée par le module 38 de manière à définir une stratégie de sauvegarde.

Une matrice de problèmes potentiels détectables et de solutions prédéfinies de paramétrage peut aussi être prévue pour compléter l'analyse et affiner la stratégie de sauvegarde.

On peut ainsi, à titre d'exemple, définir les situations caractéristiques suivantes :
1- cas nominal d'utilisation : installation informatique 12 fonctionnant trois heures par jour ;
2- cas spécial d'utilisation : installation informatique 12 fonctionnant tout le temps, c'est-à-dire jamais arrêtée en utilisation courante ;
3- cas critique d'utilisation : application de sauvegarde 34 exécutée manuellement et rarement, ou installation informatique 12 fonctionnant 2 heures par mois, ou compte de sauvegarde associé à l'installation 12 dans le système de sauvegarde 16 vide depuis trop longtemps ;
4- blocage ou arrêt brutal de l'application 32 d'analyse et de sauvegarde durant la phase d'analyse des fichiers susceptibles d'être sauvegardés ou de transfert des fichiers à télécharger ;
5- phase d'analyse des fichiers susceptibles d'être sauvegardés trop longue ;
6- sauvegarde contrariée par d'autres applications (antivirus trop contraignant, pas assez de droits) ;
7- Connexion au réseau 18 de mauvaise qualité ;
8- compte de sauvegarde associé à l'installation 12 dans le système de sauvegarde 16 vide depuis trop longtemps ;
9- temps de transfert des fichiers à sauvegarder trop long ;
10- problème inconnu ;
11- plan d'urgence : aucun fichier transféré sur le compte de sauvegarde associé à l'installation 12 une semaine après activation de l'application de sauvegarde 34.

Face à ces situations caractéristiques on peut, à titre d'exemple, prévoir les règles de paramétrage suivantes :
A - si un problème est détecté durant la phase d'analyse des fichiers susceptibles d'être sauvegardés ou de transfert des fichiers à télécharger (trop long, blocage ou arrêt brutal), on exclut temporairement la source de donnée en cause pour permettre la continuité de la sauvegarde des autres données ;
B - paramétrer l'application de sauvegarde 34 pour qu'elle fonctionne conformément au mode de réalisation illustré par la figure 3 ;
C - garder, dans un fichier de suivi de sauvegarde, le résultat de l'action précédente pour pouvoir le reprendre suite à un arrêt brutal éventuel ;
D - paramétrer l'application de sauvegarde 34 pour qu'elle fonctionne dans un mode très dégradé dans lequel aucune analyse des fichiers susceptible d'être sauvegardés n'est réalisée, mais où seuls certains répertoires jugés a priori critiques sont sauvegardés ;
E - prévoir une gestion de connectivité visant à avertir au mieux l'application de sauvegarde 34 de problèmes réseaux éventuels ;
F - optimiser la vitesse de la phase d'analyse ;
G - regrouper les petits fichiers à sauvegarder par lots ;
H - compresser certains types de fichiers, par exemple les images ;
I - classer les fichiers par ordre d'importance ;
J - prévoir un suivi d'activité clair et synthétique, un suivi complet et un suivi de l'environnement en cours d'exécution de l'application de sauvegarde 34 ;
K - reprise de la phase d'analyse des fichiers susceptibles d'être sauvegardés ou de transfert des fichiers à télécharger à la dernière position ;
L - définir une présélection et/ou une exclusion de certains éléments pour la première sauvegarde ;
M - sauvegarder temporairement des images réduites ;
N - paramétrer l'application de sauvegarde 34 pour qu'elle fonctionne dans un mode dans lequel le temps de la phase d'analyse des fichiers susceptibles d'être sauvegardés est limité, de manière à rapidement commencer une sauvegarde, l'analyse pouvant être reprise par la suite pour effectuer une sauvegarde plus complète.

La matrice peut alors prendre la forme suivante :

| | **A** | **B** | **C** | **D** | **E** | **F** | **G** | **H** | **I** | **J** | **K** | **L** | **M** | **N** |
|---|---|---|---|---|---|---|---|---|---|---|---|---|---|---|
| **1** | X | | X | | | X | X | X | X | | X | | | X |
| **2** | | X | | | | | | | | | | | | |
| **3** | | | | X | | | X | X | X | | | X | X | X |
| **4** | X | X | X | | | | | | | | X | | | |
| **5** | X | | X | | | X | | | | | X | | | X |
| **6** | | | | | | | | | | X | | | | |
| **7** | | | | | X | | | | | | | | X | |
| **8** | | | | X | | | X | X | X | | X | | | X |
| **9** | | | | | | | X | X | | | | | X | |
| **10** | | | | | | | | | | X | | | | |
| **11** | | | | | | | | | | | X | X | | |

Le fonctionnement du module d'analyse 38 est présenté ci-dessus comme basé sur un ensemble de règles et peut donc être implémenté sous la forme d'un système expert. Mais en variante, il est aussi possible d'envisager une implémentation sous la forme d'un réseau de neurones, du type perceptron multicouches, dans lequel les données d'entrée sont les données extraites par le module programmé 30 et les données de sortie sont les paramètres de l'application de sauvegarde 34. Un ensemble de règles n'est, dans ce dernier cas, pas nécessairement prédéfini, mais se construit par paramétrage automatique du réseau de neurones lors de phases d'apprentissages.

En complément du paramétrage réalisé par le module d'analyse 38, un accès aux paramètres de l'application de sauvegarde 34, et plus généralement à ceux de l'application d'analyse et de sauvegarde 32 peut être autorisé à distance, depuis le serveur de sauvegarde 40 ou tout autre serveur d'administration. Des autorisations spécifiques d'accès sont alors prévues, pour permettre à un administrateur du système de sauvegarde 16 d'accéder aux paramètres de plusieurs applications d'analyse et de sauvegarde implémentées dans plusieurs installations informatiques telles que les installations 12 et 14.

Grâce à ces autorisations spécifiques, l'administrateur est en mesure de réguler le trafic de données numériques entrantes et à sauvegarder dans la pluralité d'espaces de stockage sécurisés 42, 44, 46. Il peut ainsi, pour éviter toute surcharge du système de sauvegarde 16 notamment en cas de connexions simultanées trop nombreuses, contrôler à distance la stratégie de sauvegarde de l'application 32 de l'installation informatique 12 et des autres installations. En d'autres termes, il peut imposer une gestion des priorités permettant que les fichiers les plus importants dans les installations les plus importantes soient sauvegardés en priorité. Cette intervention autorisée de l'administrateur est bien évidemment transparente pour l'utilisateur de l'installation informatique 12. L'intervention de l'administrateur dans le paramétrage à distance peut se faire pour l'ensemble des installations gérées par le système de sauvegarde, pour une partie d'entre elles seulement, ou pour une seule installation informatique.

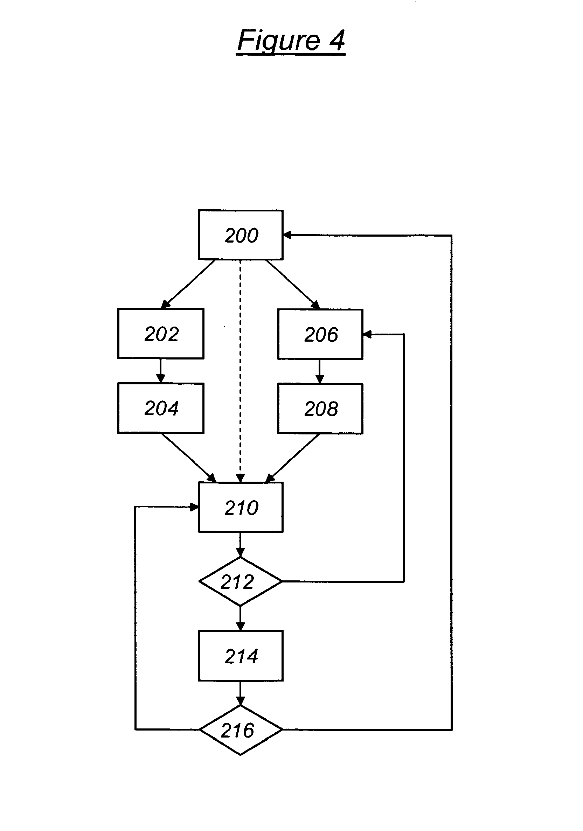

Les étapes successives d'un procédé de sauvegarde, mis en oeuvre par le système 10 illustré sur la figure 1 selon un mode de réalisation de l'invention, va maintenant être décrit en référence à la figure 4.

Lors d'une première étape d'initialisation 200, l'application d'analyse et de sauvegarde 32 lance l'exécution des modules programmés 30, 36 et 38.

Cette première étape est donc suivie, d'une part par deux étapes 202 et 204 d'extraction et d'analyse des informations de fonctionnement de l'installation informatique 12 pour déterminer les paramètres de l'application de sauvegarde 34 en fonction du résultat de cette analyse (fonction des modules 30 et 38), et d'autre part par deux étapes 206 et 208 d'analyse des données numériques conservées en mémoire et de classification des données numériques analysées en une pluralité de classes de priorités différentes (fonction du module 36).

Lors de l'étape d'extraction 202, le module programmé 30 s'exécute conformément à ce qui a été décrit précédemment et fournit les informations extraites au module programmé 38.

Lors de l'étape d'analyse et de paramétrage 204, le module programmé 38 s'exécute conformément à ce qui a été décrit précédemment et détermine les paramètres de fonctionnement de l'application de sauvegarde 34. Lors de cette étape, mais aussi tout au long de la mise en oeuvre du procédé de sauvegarde, comme cela a été indiqué également, l'administrateur du système de sauvegarde 16 peut intervenir dans la définition des paramètres, de manière à affiner la stratégie de sauvegarde notamment en fonction de contraintes extérieures à l'installation informatique 12. C'est aussi lors de cette étape que le module d'analyse 38 peut décider d'imposer une sauvegarde en mode dégradé. Enfin, lors de l'étape 204, un fichier, dit fichier « cache », reprenant une arborescence des données de l'installation 12 déjà sauvegardées dans le système de sauvegarde 16, comportant en outre éventuellement également les attributs des fichiers correspondants, peut être téléchargé depuis le serveur de sauvegarde 40, notamment si des données ont été modifiées dans le système de sauvegarde 16 sans intervention de l'application d'analyse et de sauvegarde 32. Ce fichier cache permet de limiter l'utilisation de la bande passante de l'installation informatique 12 vis-à-vis du réseau 18 et donc d'accélérer le traitement de la sauvegarde.

Lors de l'étape d'analyse 206, le module 36 d'analyse et de classification des données répertorie l'ensemble des fichiers de l'installation informatique 12 susceptibles d'être sauvegardés et extrait automatiquement des informations sur ces fichiers conformément à ce qui a été décrit précédemment.

Lors de l'étape suivante de classification 208, il analyse ces informations extraites pour associer chaque fichier à une classe de priorité donnée, pour éventuellement exclure a priori certains fichiers de la sauvegarde, ou pour au contraire en considérer certains comme vitaux, conformément à ce qui a été décrit précédemment.

Les étapes 206 et 208 peuvent prendre beaucoup de temps. Ainsi, selon un mode de réalisation de l'invention, ces étapes sont réalisées par tranches temporelles. En d'autres termes, au bout d'un certain temps prédéterminé, si l'analyse et la classification ne sont pas terminées, on passe quand-même à une étape 210 de déclenchement de l'application de sauvegarde 34, quitte à revenir plus tard au étapes 206 et 208 pour poursuivre l'analyse et la classification des données restantes.

Lors de l'étape 210, l'exécution de l'application de sauvegarde 34 est déclenchée sur au moins une partie des données numériques de l'installation informatique 12, en fonction des paramètres et des classes de priorités déterminés aux étapes 204 et 208.

Lors de cette étape, l'application de sauvegarde 34 transmet chaque donnée numérique à sauvegarder, selon les règles de priorités et/ou de sélection établies par les modules programmés 36 et 38.

Dans un mode de réalisation, elle effectue en outre un test de régulation de charge en fonction de la charge du système de sauvegarde 16 avant de transmettre chaque donnée ou groupe de données. Dans ce cas, le serveur de sauvegarde 40 transmet régulièrement à l'installation 12 une information sur sa charge courante, permettant par exemple de définir cinq niveaux de charge : « calme », « normal », « chargé », « maximal », « refus », associés chacun à un score S1 prédéterminé. La donnée à sauvegarder est alors elle-même associée à un score S2 calculé en fonction du coefficient de priorité C1 de la classe dans laquelle elle a été placée lors de l'étape 208, mais pondéré par d'autres coefficients imposés par l'administrateur du système de sauvegarde, tels que par exemple :
- un coefficient d'utilisateur C2 prenant une valeur haute lorsqu'il s'agit d'une première sauvegarde pour l'installation 12 et une valeur basse sinon,
- un coefficient d'importance de la donnée C3, pouvant être calculé selon une méthode similaire à celle utilisée par le module programmé 36, mais par l'administrateur,
- un coefficient C4 de mise à jour de la donnée prenant une valeur haute lorsqu'il s'agit d'une première sauvegarde pour cette donnée et une valeur basse sinon.

En pratique, S2 peut être obtenu par la formule S2 = C1 . (C2 + C3 + C4), puis comparé à S1. Si S2 est supérieur ou égal à S1, la donnée est transmise au serveur de sauvegarde, sinon elle est n'est pas transmise et est mise de côté pour une autre sauvegarde.

Dans un mode de réalisation, l'application de sauvegarde 34 effectue un autre test sur la donnée à sauvegarder, avant de la transmettre effectivement au serveur de sauvegarde 40. Elle réalise un calcul de signature classique sur cette donnée et transmet cette signature au serveur de sauvegarde 40. Celui-ci compare cette signature à celles des données qui sont déjà stockées dans ses espaces de stockage sécurisés 42, 44, 46, y compris pour d'autres installations que l'installation 12. Si une donnée déjà présente dans le système de stockage 16 a la même signature que la donnée à sauvegarder pour l'installation 12, seule une référence à cette donnée sera stockée par le serveur de sauvegarde 40 pour l'installation 12 et la donnée n'a pas besoin d'être transmise. Sinon, la donnée à sauvegarder est transmise. Ce mode de réalisation permet d'alléger la charge du système de sauvegarde 16 en évitant des redondances de fichiers dans les espaces de stockage sécurisés 42, 44 et 46.

Lorsque l'étape 210 est terminée, on passe à une étape de test 212 pour vérifier si toutes les données susceptibles d'être sauvegardées ont été traitées, ou s'il reste encore des données à analyser (lorsque les étapes 206 et 208 sont réalisées par tranches, ou lorsque la sauvegarde a été réalisée sous un mode dégradé, ou suite à une première sauvegarde, ou lorsque des données ont été sources d'erreurs fatales, etc.). Si des données doivent être encore analysées, on revient à l'étape 206, sinon on passe à une étape 214.

Lorsque la sauvegarde est réalisée par tranches, il est possible de remettre à plus tard la sauvegarde de certaines données, notamment présentes et non modifiées depuis un certain temps dans l'installation informatique 12. Il est ainsi possible de définir une priorité décroissante des données en fonction de leur ancienneté, les sauvegardes successives remontant progressivement dans le temps.

L'étape 214 consiste à attendre un événement, par exemple un signal d'horloge pour une réinitialisation de l'application d'analyse et de sauvegarde 32 (événement A) ou la détection de la création en mémoire ou de la modification d'une donnée susceptible d'être sauvegardée (événement B).

Lorsqu'un événement est détecté, on passe à une étape de test 216 pour identifier cet événement. L'événement A provoque un retour à l'étape 200, tandis que l'événement B provoque l'analyse de la donnée numérique créée ou modifiée, pour lui affecter un coefficient de priorité, puis un retour à l'étape 210, pour exécuter l'application de sauvegarde 34 sur cette donnée numérique, en fonction des paramètres et du coefficient de priorité qui lui est affecté.

Dans un mode de réalisation de l'invention, lorsque l'installation informatique 12 réalise sa première sauvegarde vers le système de sauvegarde 16, l'étape initiale 200 est immédiatement suivie par l'étape d'exécution de l'application de sauvegarde 210 sans exécution des modules programmés 30, 36 et 38, comme indiqué par la flèche en pointillés dans la figure 4. La sauvegarde est lancée sous la forme d'une sauvegarde rapide pour ne transmettre qu'un certain nombre limité de données numériques considérées a priori comme vitales, telles que les données relatives à un carnet d'adresse d'une application de messagerie électronique, les favoris et, par exemple, les dix derniers documents lus.

Il apparaît clairement qu'un système de sauvegarde de données tel que celui présenté en référence aux figures 1 à 4 permet de faciliter la sauvegarde de données du point de vue de l'utilisateur, puisqu'il ne requiert que très peu d'interventions de sa part.

On notera aussi que l'invention ne se limite pas aux modes de réalisations décrits précédemment.

Notamment l'installation informatique ne se limite pas aux deux structures illustrées en figure 1. En variante, l'installation informatique peut être constituée d'une pluralité d'ordinateurs et/ou autres dispositifs susceptibles de stocker des données reliés entre eux en réseau local.

En variante également, d'autres règles que celles présentées peuvent affiner les étapes de paramétrage de l'application de sauvegarde et d'analyse des données en vue de leur classification.

## Revendications

1. Procédé de sauvegarde automatique de données numériques conservées en mémoire (26, 28) dans une installation informatique (12, 14) vers un système de sauvegarde (16), comportant l'étape consistant à analyser (206) les données numériques conservées en mémoire (26, 28) et classer (208) les données numériques analysées en une pluralité de classes de priorités différentes, le procédé étant **caractérisé en ce que** le système de sauvegarde (16) est distant et accessible par l'installation informatique (12, 14) via un réseau (18) de transmission de données, et **en ce qu'**il comporte en outre les étapes consistant à :
- extraire et analyser (202) des informations de fonctionnement de l'installation informatique (12, 14), ces informations de fonctionnement comportant au moins l'un des éléments de l'ensemble constitué d'une puissance et d'une mémoire disponibles, de la nature et de la version du système d'exploitation de l'installation informatique, de la nature des applications installées et exécutables par l'installation informatique, de la nature et de la capacité d'une connexion de l'installation informatique au réseau de transmission (18), d'une date de fabrication ou mise en service de l'installation informatique, d'une fréquence de mise en route, en veille ou en arrêt de l'installation informatique, et d'une organisation générale des répertoires et d'un classement de fichiers dans ces répertoires,
- déterminer (204) des paramètres d'une application (34) de sauvegarde de données vers le système de sauvegarde (16), en fonction du résultat de cette analyse, et
- exécuter (210) l'application de sauvegarde (34) sur au moins une partie des données numériques, en fonction des paramètres et des classes de priorités déterminés.

2. Procédé de sauvegarde automatique de données numériques selon la revendication 1, dans lequel les paramètres de l'application de sauvegarde (34) comportent au moins l'un des éléments de l'ensemble constitué d'une limite de puissance consommée autorisée pour l'application de sauvegarde, d'une option d'exécution de l'application de sauvegarde en mode dégradé et de critères de sélection des données numériques à sauvegarder.

3. Procédé de sauvegarde automatique de données numériques selon la revendication 1 ou 2, dans lequel les critères de sélection et/ou la classification des données numériques en classes de priorités différentes portent au moins sur la nature des données numériques.

4. Procédé de sauvegarde automatique de données numériques selon la revendication 3, dans lequel les critères de sélection et/ou la classification des données numériques en classes de priorités différentes portent en outre sur au moins l'un des éléments de l'ensemble constitué de leur taille, de leurs dates de création, de dernière modification et/ou de dernier accès, de données supplémentaires d'informations qui leur sont associées, d'un répertoire dans lequel elles sont situées, d'une relation entre ces données et une base de registre d'un système d'exploitation de l'installation informatique (12, 14) et d'une appartenance à une liste de données soit a priori exclues, soit a priori inclues.

5. Procédé de sauvegarde automatique de données numériques selon l'une quelconque des revendications 1 à 4, comportant une étape consistant à définir au moins une partie des paramètres de l'application de sauvegarde (34) depuis un serveur d'administration (40) connecté au réseau (18) de transmission de données et à transmettre cette partie de paramètres à l'installation informatique (12, 14) pour l'exécution de l'application de sauvegarde (34) sur la base d'au moins cette partie de paramètres.

6. Procédé de sauvegarde automatique de données numériques selon l'une quelconque des revendications 1 à 4, comportant en outre une étape (214) consistant à détecter la création en mémoire (26, 28) ou la modification d'une donnée numérique et, en réponse à cette détection, à analyser cette donnée numérique pour lui affecter un coefficient de priorité et à exécuter (210) l'application de sauvegarde (34) sur cette donnée numérique, en fonction des paramètres et du coefficient de priorité qui lui est affecté.

7. Support de données lisible par un ordinateur comportant des instructions pour la mise en oeuvre d'un procédé selon l'une quelconque des revendications 1 à 6.

8. Installation informatique (12, 14) pour la sauvegarde automatique de données numériques, comportant des moyens (26, 28) de stockage de données numériques, des moyens (36) d'analyse des données numériques stockées par l'installation informatique et des moyens (36) de classification des données numériques analysées en une pluralité de classes de priorités différentes, **caractérisée en ce qu'**elle comporte en outre :
- une application (34) de sauvegarde d'au moins une partie des données numériques vers un système de sauvegarde distant (16) accessible par l'installation informatique (12, 14) via un réseau (18) de transmission de données,
- des moyens (30) d'extraction d'informations de fonctionnement de l'installation informatique (12, 14), ces informations de fonctionnement comportant au moins l'un des éléments de l'ensemble constitué d'une puissance et d'une mémoire disponibles, de la nature et de la version du système d'exploitation de l'installation informatique, de la nature des applications installées et exécutables par l'installation informatique, de la nature et de la capacité d'une connexion de l'installation informatique au réseau de transmission (18), d'une date de fabrication ou mise en service de l'installation informatique, d'une fréquence de mise en route, en veille ou en arrêt de l'installation informatique, et d'une organisation générale de répertoires et d'un classement de fichiers dans ces répertoires,
- des moyens (38) d'analyse de ces informations, et
- des moyens (38) de détermination de paramètres de l'application de sauvegarde (34) en fonction du résultat de cette analyse,
et **en ce que** l'application de sauvegarde (34) est configurée pour s'exécuter sur au moins une partie des données numériques, en fonction des paramètres et des classes de priorités déterminés.

9. Système informatique (10) pour la sauvegarde automatique de données numériques conservées en mémoire (26, 28) dans une installation informatique (12, 14), comportant une installation informatique (12, 14) selon la revendication 8 et un système de sauvegarde distant (16) accessible par l'installation informatique (12, 14) via un réseau (18) de transmission de données.

## Claims

1. A method for automatic backup of digital data, kept in memory (26, 28) in a computer installation (12, 14), to a backup system (16) comprising the step consisting in analysing (206) the digital data kept in memory (26, 28) and classifying (208) the analysed digital data into a plurality of classes of differing priorities, the method being **characterised in that** the backup system (16) is remote and accessible by the computer installation (12, 14) via a data transmission network (18), and **in that** it further comprises the steps consisting in:
- extracting and analysing (202) operating information of the computer installation(12, 14), said operating information including at least one of the elements of the set consisting of available power and memory, of the nature and of the version of the operating system of the computer installation, of the nature of the applications installed and able to be executed by the computer installation, of the nature and capacity of a connection of the computer installation to the transmission network (18), of a date of manufacture or of commissioning of the computer installation, of a frequency with which computer installation is started up, put on standby or shut down, and of a general organisation of the directories and classification of the files in these directories,
- determining (204) the settings of an application (34) for backing up data to the backup system (16), depending on the result of this analysis, and
- executing (210) the backup application (34) on at least a part of the digital data, according to the determined settings and classes of priorities.

2. A method for automatic backup of digital data according to claim 1, wherein the settings of the backup application (34) comprise at least one of the elements of the set consisting of a consumed power limit authorised for the backup application, an option to execute the backup application in degraded mode, and criteria for selecting the digital data to be backed up.

3. A method for automatic backup of digital data according to claim 1 or 2, wherein the criteria for selection and/or the classification of the digital data into classes of differing priorities relate at least to the nature of the digital data.

4. A method for automatic backup of digital data according to claim 3, wherein the criteria for selection and/or the classification of the digital data into classes of differing priorities also relate to at least one of the elements of the set consisting of its size, of its dates of creation, latest modification and/or latest access, of additional data associated with it, of a directory in which it is located, of a relationship between this data and a registry database of the operating system of the computer installation (12, 14) and of whether or not the data is included in a list of data which is a priori excluded, or a priori included.

5. A method for automatic backup of digital data according to any one of claims 1 to 4, comprising a step consisting in defining at least a part of the settings of the backup application (34) from an administration server (40) connected to the data transmission network (18), and in transmitting said part of the settings to the computer installation (12, 14) for execution of the backup application (34) on the basis of at least said part of the settings.

6. A method for automatic backup of digital data according to any one of claims 1 to 4, further comprising a step (214) consisting in detecting the creation in memory (26, 28) or the modification of a digital element and, in response to this detection, in analysing this digital element in order to assign a priority coefficient to it, and in executing (210) the backup application (34) on this digital element, according to the settings and the priority coefficient which is assigned to it.

7. A computer-readable data medium including instructions for implementation of a method according to any one of claims 1 to 6.

8. A computer installation (12, 14) for the automatic backup of digital data, comprising means (26, 28) for storage of digital data, means (36) for analysing the digital data stored by the computer installation and means (36) for classifying the analysed digital data into a plurality of classes of differing priorities, **characterised in that** it further includes:
- an application (34) for backing up at least part of the digital data to a remote backup system (16) accessible by the computer installation (12, 14) via a data transmission network (18)
- means (30) for extracting operating information of the computer installation (12, 14), said operating information including at least one of the elements of the set consisting of available power and memory, of the nature and of the version of the operating system of the computer installation, of the nature of the applications installed and able to be executed by the computer installation, of the nature and capacity of a connection of the computer installation to the transmission network (18), of a date of manufacture or of commissioning of the computer installation, of a frequency with which computer installation is started up, put on standby or shut down, and of a general organisation of the directories and classification of the files in these directories,
- means (38) for analysing this information, and
- means (38) for determining settings of the backup application (34) according to the result of this analysis,
and **in that** the backup application (34) is configured in order to be executed on at least a part of the digital data, according to the determined settings and classes of priorities.

9. A computer system (10) for the automatic backup of digital data kept in memory (26, 28) in a computer installation (12, 14), comprising a computer installation (12, 14) according to claim 8 and a remote backup system (16) accessible by the computer installation (12, 14) via a data transmission network (18).

## Patentansprüche

1. Verfahren zur automatischen Sicherung von digitalen Daten, die im Speicher (26, 28) einer Informatikeinrichtung (12, 14) gespeichert sind, in einem Backupsystem (16), umfassend den Schritt, der darin besteht, die im Speicher (26, 28) gespeicherten digitalen Daten zu analysieren (206) und die analysierten digitalen Daten in eine Vielzahl verschiedener Prioritätsklassen einzuteilen (208), wobei das Verfahren **dadurch gekennzeichnet ist, dass** das Backupsystem (16) entfernt ist und für die Informatikeinrichtung (12, 14) über ein Datenübertragungsnetz (18) zugänglich ist, und dass es darüber hinaus die Schritte umfasst, die darin bestehen:
- Informationen zum Betrieb der Informatikeinrichtung (12, 14) zu extrahieren und zu analysieren (202), wobei diese Betriebsinformationen mindestens eines der Elemente der Gruppe umfassen, die gebildet wird aus einer verfügbaren Leistung und einem verfügbaren Speicher, aus der Art und der Version des Betriebssystems der Informatikeinrichtung, aus der Art der installierten und durch die Informatikeinrichtung ausführbaren Anwendungen, aus der Art und der Kapazität eines Anschlusses der Informatikeinrichtung an das Übertragungsnetz (18), aus einem Herstellungs- oder Inbetriebnahmedatum der Informatikeinrichtung, aus einer Häufigkeit, mit der die Informatikeinrichtung eingeschaltet, in den Standby-Zustand versetzt oder ausgeschaltet wird, und aus einem allgemeinen Aufbau der Verzeichnisse und einer Klassifizierung der Dateien in diesen Verzeichnissen,
- in Abhängigkeit vom Ergebnis dieser Analyse Parameter einer Anwendung (34) zur Sicherung von Daten im Backupsystem (16) zu bestimmen (204), und
- in Abhängigkeit von den Parametern und den festgelegten Prioritätsklassen die Sicherungsanwendung (34) mit mindestens einem Teil der digitalen Daten auszuführen (210).

2. Verfahren zur automatischen Sicherung von digitalen Daten nach Anspruch 1, wobei die Parameter der Sicherungsanwendung (34) mindestens eines der Elemente der Gruppe umfassen, die gebildet wird aus einer Grenze für die verbrauchte Leistung, die für die Sicherungsanwendung zulässig ist, aus einer Option zur Ausführung der Sicherungsanwendung im Notbetrieb und aus Kriterien zur Auswahl der zu sichernden digitalen Daten.

3. Verfahren zur automatischen Sicherung von digitalen Daten nach Anspruch 1 oder 2, wobei die Kriterien zur Auswahl und/oder Klassifizierung der digitalen Daten in verschiedene Prioritätsklassen mindestens die Art der digitalen Daten berücksichtigen.

4. Verfahren zur automatischen Sicherung von digitalen Daten nach Anspruch 3, wobei die Kriterien zur Auswahl und/oder Klassifizierung der digitalen Daten in verschiedene Prioritätsklassen darüber hinaus eines der Elemente der Gruppe berücksichtigen, die gebildet wird aus ihrer Größe, aus ihrem Datum der Erstellung, der letzten Änderung und/oder des letzten Zugriffs, aus zusätzlichen Informationsdaten, die ihnen zugeordnet sind, aus einem Verzeichnis, in dem sie sich befinden, aus einer Beziehung zwischen diesen Daten und einer Registrierungsdatenbank eines Betriebssystems der Informatikeinrichtung (12, 14) und aus der Zugehörigkeit zu einer Liste von Daten, die von vornherein ausgeschlossen sind oder von vornherein inkludiert sind.

5. Verfahren zur automatischen Sicherung von digitalen Daten nach einem der Ansprüche 1 bis 4, umfassend einen Schritt, der darin besteht, mindestens einen Teil der Parameter der Sicherungsanwendung (34) ausgehend von einem Administrationsserver (40) zu definieren, der mit dem Datenübertragungsnetz (18) verbunden ist, und diesen Teil der Parameter an die Informatikeinrichtung (12, 14) zu übertragen, um die Sicherungsanwendung (34) auf der Basis wenigstens dieses Teils der Parameter auszuführen.

6. Verfahren zur automatischen Sicherung von digitalen Daten nach einem der Ansprüche 1 bis 4, umfassend darüber hinaus einen Schritt (214), der darin besteht, die Erstellung von digitalen Daten im Speicher (26, 28) oder deren Änderung zu erkennen und als Reaktion auf diese Erkennung diese digitalen Daten zu analysieren, um ihnen einen Prioritätskoeffizienten zuzuweisen und in Abhängigkeit von den Parametern und dem ihnen zugewiesenen Prioritätskoeffizienten die Sicherungsanwendung (34) auf diese digitalen Daten anzuwenden (210).

7. Computerlesbarer Datenträger, umfassend Anweisungen zur Ausführung eines Verfahrens nach einem der Ansprüche 1 bis 6.

8. Informatikeinrichtung (12, 14) zur automatischen Sicherung von digitalen Daten, umfassend Mittel (26, 28) zur Speicherung von digitalen Daten, Mittel (36) zur Analyse der von der Informatikeinrichtung gespeicherten digitalen Daten und Mittel (36) zur Klassifizierung der analysierten digitalen Daten in eine Vielzahl verschiedener Prioritätsklassen, **dadurch gekennzeichnet, dass** sie darüber hinaus umfasst:
- eine Anwendung (34) zur Sicherung von mindestens einem Teil der digitalen Daten in einem entfernten Backupsystem (16), das für die Informatikeinrichtung (12, 14) über ein Datenübertragungsnetz (18) zugänglich ist;
- Mittel (30) zum Extrahieren von Informationen zum Betrieb der Informatikeinrichtung (12, 14), wobei diese Betriebsinformationen mindestens eines der Elemente der Gruppe umfassen, die gebildet wird aus einer verfügbaren Leistung und einem verfügbaren Speicher, aus der Art und der Version des Betriebssystems der Informatikeinrichtung, aus der Art der installierten und durch die Informatikeinrichtung ausführbaren Anwendungen, aus der Art und der Kapazität eines Anschlusses der Informatikeinrichtung an das Übertragungsnetz (18), aus einem Herstellungs- oder Inbetriebnahmedatum der Informatikeinrichtung, aus einer Häufigkeit, mit der die Informatikeinrichtung eingeschaltet, in den Standby-Zustand versetzt oder ausgeschaltet wird, und aus einem allgemeinen Aufbau der Verzeichnisse und einer Klassifizierung der Dateien in diesen Verzeichnissen,
- Mittel (38) zur Analyse dieser Informationen, und
- Mittel (38) zum Bestimmen von Parametern der Sicherungsanwendung (34) in Abhängigkeit vom Ergebnis dieser Analyse,
und dass die Sicherungsanwendung (34) derart konfiguriert ist, dass sie in Abhängigkeit von den Parametern und den festgelegten Prioritätsklassen mit mindestens einem Teil der digitalen Daten ausgeführt wird.

9. Informatiksystem (10) zur automatischen Sicherung von digitalen Daten, die im Speicher (26, 28) einer Informatikeinrichtung (12, 14) gespeichert sind, umfassend eine Informatikeinrichtung (12, 14) nach Anspruch 8 und ein entferntes Backupsystem (16), das für die
Informatikeinrichtung (12, 14) über ein Datenübertragungsnetz (18) zugänglich ist.
